(19) **Europäisches Patentamt / European Patent Office / Office européen des brevets**

(11) **EP 4 696 402 A1**

(12) **EUROPEAN PATENT APPLICATION**
published in accordance with Art. 153(4) EPC

(43) Date of publication:
**18.02.2026 Bulletin 2026/08**

(21) Application number: **24788599.9**

(22) Date of filing: **29.03.2024**

(51) International Patent Classification (IPC):
**B01D 53/04** $^{(2006.01)}$   **C01B 32/50** $^{(2017.01)}$

(52) Cooperative Patent Classification (CPC):
**B01D 53/04; C01B 32/50**

(86) International application number:
**PCT/JP2024/013064**

(87) International publication number:
**WO 2024/214571 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023 JP 2023064972**

(71) Applicant: **NGK INSULATORS, LTD.**
**Nagoya-shi, Aichi 4678530 (JP)**

(72) Inventors:
• **ANDO Junichi**
  **Nagoya-shi, Aichi 467-8530 (JP)**

• **OKUMA Yusuke**
  **Nagoya-shi, Aichi 467-8530 (JP)**
• **IIDA Kazuki**
  **Nagoya-shi, Aichi 467-8530 (JP)**
• **TAKAHASHI Michio**
  **Nagoya-shi, Aichi 467-8530 (JP)**
• **KAN Hirofumi**
  **Nagoya-shi, Aichi 467-8530 (JP)**

(74) Representative: **MERH-IP Matias Erny Reichl Hoffmann**
**Patentanwälte PartG mbB**
**Paul-Heyse-Straße 29**
**80336 München (DE)**

(54) **ACID GAS RECOVERY SYSTEM AND ACID GAS RECOVERY METHOD**

(57)    Provided are an acid gas capture system and an acid gas capture method that enable capturing an acid gas with less energy. The acid gas capture system according to an embodiment of the present disclosure includes: an acid gas adsorption part including an acid gas adsorption material capable of adsorbing an acid gas contained in a gas to be treated and capable of desorbing the adsorbed acid gas; a housing part, which includes a flow passage to which the gas to be treated is to be supplied, and which is configured to house the acid gas adsorption part so that the acid gas adsorption material is positioned in the flow passage; a heating medium supply part capable of supplying a heating medium having a pressure above an atmospheric pressure to the flow passage; and a capture part capable of capturing a captured gas containing the heating medium having passed through the acid gas adsorption part and the acid gas desorbed from the acid gas adsorption material, from the housing part.

FIG. 1A

**Description**

Technical Field

The present disclosure relates to an acid gas capture system and an acid gas capture method.

Background Art

In recent years, an attempt has been made to separate and capture an acid gas, such as carbon dioxide (hereinafter sometimes referred to as "$CO_2$"), from the atmosphere in order to reduce an environmental load. As an acid gas capture device to be used for separation and capture of an acid gas, there has been proposed a gas separation unit including a gas adsorption part having a pellet structure (see, for example, Patent Literature 1). In such an acid gas capture device, an adsorption step of causing an acid gas adsorption material to adsorb an acid gas to separate the acid gas from the atmosphere, and a desorption step of heating a gas adsorption part to a predetermined desorption temperature to cause the acid gas adsorption material to desorb the acid gas, are performed in the stated order, to thereby capture the acid gas.

In such a desorption step, in general, the acid gas is sucked to be captured by reducing the pressure below the atmospheric pressure. However, there is a problem in that the heating efficiency of the gas adsorption part is decreased under reduced pressure, and the energy required for desorbing the acid gas is increased.

Citation List

Patent Literature

[PTL 1] WO 2014/170184 A1

Summary of Invention

Technical Problem

A primary object of the present disclosure is to provide an acid gas capture system and an acid gas capture method that enable capturing an acid gas with less energy.

Solution to Problem

[1] According to an embodiment of the present disclosure, there is provided an acid gas capture system, including an acid gas adsorption part, a housing part, a heating medium supply part, and a capture part. The acid gas adsorption part includes an acid gas adsorption material. The acid gas adsorption material is capable of adsorbing an acid gas contained in a gas to be treated and is capable of desorbing the adsorbed acid gas. The housing part includes a flow passage to which the gas to be treated is to be supplied. The housing part is configured to house the acid gas adsorption part so that the acid gas adsorption part is positioned in the flow passage. The heating medium supply part is capable of supplying a heating medium having a pressure above the atmospheric pressure to the flow passage. The capture part is capable of capturing a captured gas from the housing part. The captured gas contains the heating medium having passed through the acid gas adsorption part and the acid gas desorbed from the acid gas adsorption material.

[2] In the acid gas capture system according to the above-mentioned item [1], a temperature difference specific heat coefficient $\Delta Cp/\Delta T$ of the heating medium may be set so as to satisfy the following formula (1):

$$\Delta Cp/\Delta T \leq 0.039 \ (J/(mol \cdot K^2)) \ \cdots \ (1)$$

$\Delta Cp$: a difference between a constant pressure molar specific heat "a" of the supplied heating medium at an inlet of the flow passage and a constant pressure molar specific heat "b" of the captured gas discharged from the flow passage (constant pressure molar specific heat "a"-constant pressure molar specific heat "b") (unit: J/(mol·K)),
$\Delta T$: a difference between a temperature "a" of the supplied heating medium at the inlet of the flow passage and a

**EP 4 696 402 A1**

temperature "b" of the captured gas discharged from the flow passage (gas temperature "a"-gas temperature "b") (unit: K).

[3] In the acid gas capture system according to the above-mentioned item [1] or [2], the heating medium supply part may include a pressurizing device capable of pressurizing the heating medium.

[4] In the acid gas capture system according to any one of the above-mentioned items [1] to [3], the capture part may include a storage tank capable of storing the captured gas.

[5] The acid gas capture system according to the above-mentioned item [4] may further include a return part. The return part is capable of returning at least part of the captured gas stored in the storage tank, as the heating medium from the storage tank to the heating medium supply part.

[6] In the acid gas capture system according to the above-mentioned item [4] or [5], the storage tank may be capable of separating part of the heating medium from the captured gas.

[7] The acid gas capture system according to any one of items [1] to [6], the acid gas may be carbon dioxide.

[8] According to another aspect of the present disclosure, there is provided an acid gas capture method, including an adsorption step and a desorption step. In the adsorption step, a gas to be treated containing an acid gas is suppled to a flow passage of a housing part in which an acid gas adsorption part including an acid gas adsorption material is arranged, to cause the acid gas adsorption material to adsorb the acid gas. In the desorption step, a heating medium having a pressure above an atmospheric pressure is supplied to the flow passage, and the acid gas adsorption part is heated to a predetermined desorption temperature to cause the acid gas adsorption material to desorb the acid gas. In the desorption step, a captured gas containing the heating medium having passed through the acid gas adsorption part and the acid gas desorbed from the acid gas adsorption material is captured from the flow passage.

[9] In the acid gas capture method according to the above-mentioned item [8], in the desorption step, a temperature difference specific heat coefficient $\Delta Cp/\Delta T$ of the heating medium may satisfy the above-mentioned formula (1).

Advantageous Effects of Invention

According to the embodiment of the present disclosure, the acid gas can be captured with less energy.

Brief Description of Drawings

FIG. **1A** is a schematic configuration view of an acid gas capture system according to one embodiment of the present disclosure.

FIG. **1B** is a schematic configuration view of an acid gas capture system according to another embodiment of the present disclosure.

FIG. **2** is a schematic configuration view of an acid gas adsorption part of the acid gas capture system of FIG. **1A.**

FIG. **3** is a schematic perspective view of an acid gas adsorption part of an acid gas capture system according to still another embodiment of the present disclosure.

FIG. **4** is a longitudinal sectional view of the acid gas adsorption part of FIG. **3** taken along the center.

Description of Embodiments

Embodiments of the present disclosure are described below with reference to the drawings. However, the present disclosure is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

3

A. Overview of Acid Gas Capture System

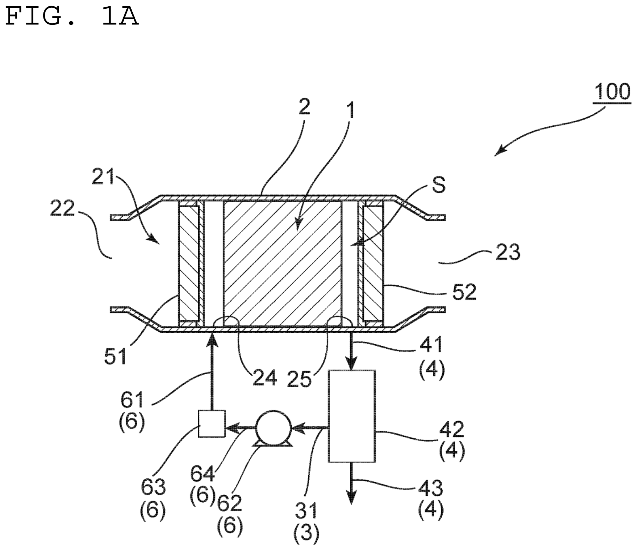

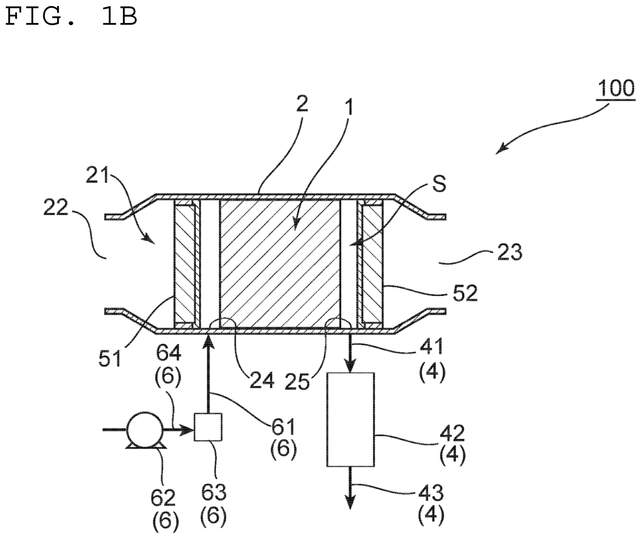

FIG. **1A** is a schematic configuration view of an acid gas capture system according to one embodiment of the present disclosure. FIG. **1B** is a schematic configuration view of an acid gas capture system according to another embodiment of the present disclosure.

An acid gas capture system **100** of the illustrated example includes an acid gas adsorption part **1,** a housing part **2,** a heating medium supply part **6,** and a capture part **4**. The acid gas adsorption part **1** includes an acid gas adsorption material. The acid gas adsorption material can adsorb an acid gas contained in a gas to be treated, and can desorb the adsorbed acid gas. The housing part **2** includes a flow passage **21** to which the gas to be treated is to be supplied. In the illustrated example, the housing part **2** has a tubular shape extending in a supply direction of the gas to be treated. The housing part **2** houses the acid gas adsorption part **1** so that the acid gas adsorption part **1** is positioned in the flow passage **21**. The heating medium supply part **6** can supply a heating medium having a pressure above the atmospheric pressure (0.1 MPaA (absolute pressure)) to the flow passage **21**. The capture part **4** can capture a captured gas from the housing part **2**. The captured gas contains the heating medium having passed through the acid gas adsorption part 1 and the acid gas desorbed from the acid gas desorption material.

With such a configuration, the acid gas capture system can perform an adsorption step and a desorption step in the stated order, and can capture an acid gas in a pressurized state. Specifically, when the gas to be treated containing the acid gas is supplied to the flow passage of the housing part, the acid gas adsorption material in the acid gas adsorption part positioned in the flow passage can adsorb the acid gas. After that, the heating medium supply part can supply the heating medium having a pressure above the atmospheric pressure (0.1 MPaA) to the flow passage. Then, under a pressure above the atmospheric pressure, the acid gas adsorption part is efficiently heated to a predetermined desorption temperature by the heating medium, and as a result, the acid gas adsorption material is efficiently heated. Thus, the acid gas can be desorbed from the acid gas adsorption material. Accordingly, the energy required for desorbing the acid gas can be significantly suppressed.

In addition, the capture part can capture the captured gas containing the heating medium having passed through the acid gas adsorption part and the acid gas desorbed from the acid gas adsorption material, from the housing part. As a result, the acid gas can be captured together with the heating medium with less energy. The captured gas contains the heating medium supplied under a state of having a pressure above the atmospheric pressure and hence is pressurized above the atmospheric pressure (0.1 MPaA). In other words, the capture part can capture the acid gas in a pressurized state (in other words, in a state of having a pressure above the atmospheric pressure) together with the heating medium. Such an acid gas is in a pressurized state, and hence can be supplied to various devices with excellent energy efficiency and effectively utilized with less energy.

In one embodiment, the housing part **2** includes a first inflow port **22,** a first outflow port **23,** a second inflow port **24,** and a second outflow port **25.**

The first inflow port **22** is positioned in an upstream end portion in the supply direction of the gas to be treated in the housing part **2**. The first inflow port **22** allows passage of the gas to be treated in the adsorption step.

The first outflow port **23** is positioned in a downstream end portion in the supply direction of the gas to be treated in the housing part **2**. The first outflow port **23** allows passage of the treated gas having the acid gas concentration reduced after passing through the acid gas adsorption part **1** in the adsorption step.

The second inflow port **24** and the second outflow port **25** are positioned between the first inflow port **22** and the first outflow port **23**. The second inflow port **24** and the second outflow port **25** are each typically formed in the side wall of the housing part **2**. The second inflow port **24** allows passage of the heating medium in the desorption step. The second outflow port **25** allows passage of the captured gas in the desorption step.

In one embodiment, the acid gas capture system **100** further includes a first valve **51** and a second valve **52.** Each of the first valve **51** and the second valve **52** can open and close the flow passage **21**. The first valve **51** is positioned on an upstream side of the acid gas adsorption part **1** in the supply direction of the gas to be treated. The second valve **52** is positioned on a side opposite to the first valve **51** with respect to the acid gas adsorption part 1. When the first valve **51** and the second valve **52** are in a closed state, the first valve **51** and the second valve **52** partition the flow passage **21** to define a housing space **S** in which the acid gas adsorption part **1** is positioned. Each of the second inflow port **24** and the second outflow port **25** is positioned between the first valve **51** and the second valve **52**. The heating medium supply part **6** can supply the heating medium in a pressurized state to the housing space **S** through the second inflow port **24.**

With such a configuration, in the desorption step, when the heating medium supply part supplies the heating medium in a pressurized state to the housing space under a condition that the first valve and the second valve are in a closed state, the housing space can be sufficiently increased in pressure. Thus, the capture part can stably capture the sufficiently pressurized captured gas through the second outflow port.

Examples of the first valve **51** include a ball valve, a gate valve, and a butterfly valve. The first valve **51** is preferably a butterfly valve. The second valve **52** is described in the same manner as in the first valve **51**.

The configuration of the heating medium supply part **6** is not particularly limited as long as the heating medium having a pressure above the atmospheric pressure can be supplied to the flow passage **21.** The pressure of the heating medium may be suitably and appropriately adjusted so that the pressure of the flow passage **21** (typically, the housing space **S)** to which the heating medium is supplied falls within a range described later.

In one embodiment, the heating medium supply part **6** includes a pressurizing device **62** that can pressurize the heating medium. When the heating medium supply part includes the pressurizing device, the heating medium can be stably pressurized to a desired pressure.

The pressurizing device **62** can typically pump the heating medium. The pressurizing device **62** has any appropriate configuration. Examples of the pressurizing device **62** include a fan, a blower, and a compressor.

The heating medium supply part **6** in the illustrated example includes a heating device **63,** a connection line **64,** and a supply line **61** in addition to the pressurizing device **62.**

The heating device **63** can typically heat the heating medium. In the illustrated example, the heating medium pressurized by the pressurizing device **62** is supplied to the heating device **63.** The heating device **63** has any appropriately configuration. Examples of the heating device **63** include a heater and a heat exchanger.

The connection line **64** is typically a pipe that can supply the heating medium pressurized by the pressurizing device **62** to the heating device **63.** An upstream end portion in a supply direction of the heating medium in the connection line **64** is connected to the pressurizing device **62.** A downstream end portion in the supply direction of the heating medium in the connection line **64** is connected to the heating device **63.**

The supply line **61** is typically a pipe that allows passage of the heated and pressurized heating medium. An upstream end portion in a passage direction of the heating medium in the supply line **61** is connected to the heating device **63.** A downstream end portion in the passage direction of the heating medium in the supply line **61** is connected to a side wall of the housing part **2** so as to be in communication with the second inflow port **24.** As a result, the heating medium supply part can stably supply the heating medium in a pressurized state to the housing space of the housing part.

In one embodiment, the capture part **4** includes a storage tank **42.** The storage tank **42** can typically store the captured gas in a pressurized state.

The storage tank **42** may have any appropriate configuration. The storage tank **42** is typically configured so as to be able to separate part of the heating medium from the captured gas to be stored. In the storage tank **42** in the illustrated example, the inside of the storage tank **42** is pressurized above the atmospheric pressure (0.1 MPaA), and hence part of the heating medium can be drained (liquefied). As a result, part of the drained heating medium is accumulated in a bottom portion of the storage tank **42.** Thus, the self-pressure of the captured gas can be effectively utilized for partial separation of the heating medium.

The capture part **4** in the illustrated example includes a capture line **41** and a discharge line **43** in addition to the storage tank **42.**

The capture line **41** is typically a pipe that allows passage of the captured gas discharged from the second outflow port **25.** An upstream end portion in a passage direction of the captured gas in the capture line **41** is connected to the side wall of the housing part **2** so as to be in communication with the second outflow port **25.** A downstream end portion in the passage direction of the captured gas in the capture line **41** is connected to the storage tank **42.** Although not shown, the capture line **41** may be provided with a valve that can adjust the flow rate of the captured gas. With this configuration, in the desorption step, the internal pressure of the housing space can be suitably adjusted, and as a result, a captured gas having a desired pressure can be captured.

The discharge line **43** is typically a pipe that can discharge part of the heating medium separated in the storage tank **42.** An upstream end portion in a discharge direction of the captured gas in the discharge line **43** is connected to the bottom portion of the storage tank **42.** As a result, impurities can be removed from the acid gas capture system.

As illustrated in FIG. **1A,** in one embodiment, the acid gas capture system **100** further includes a return part 3.

The return part **3** can return at least part of the captured gas stored in the storage tank **42,** as the heating medium from the storage tank **42** to the heating medium supply part **6.** Thus, the self-pressure of the captured gas can be effectively utilized for pressurizing the heating medium in the heating medium supply part. As a result, the energy required for driving the pressurizing device **62** can be reduced, or a heating medium having a pressure above the atmospheric pressure can be supplied to the flow passage without using the pressurizing device **62.** Thus, the acid gas capture system **100** can be operated with less energy.

In the illustrated example, the return part **3** can return at least part of the captured gas as the heating medium from the storage tank **42** to the pressurizing device **62.** The return part **3** typically includes a return line **31.**

The return line **31** is typically a pipe that allows passage of the captured gas returned as the heating medium. In the illustrated example, an upstream end portion in a return direction of the captured gas in the return line **31** is connected to the storage tank **42.** A downstream end portion in the return direction of the captured gas in the return line **31** is connected to the pressurizing device **62.**

In FIG. **1A,** the storage tank **42** is connected to the pressurizing device **62** as a supply source of the heating medium through the return line **31,** but the acid gas capture system **100** is not limited thereto. The acid gas capture system **100** illustrated in FIG. **1B** does not include the return part 3. In this case, the captured gas is not returned from the storage tank **42** to the pressurizing device **62,** and the heating medium is supplied from a supply source other than the storage tank **42.**

Further, although not shown, the acid gas capture system **100** may also be configured without the pressurizing device **62.** In this case, typically, a heating medium (for example, water vapor) having a self-pressure above the atmospheric pressure is supplied to the heating device **63.** As a result, the acid gas capture system can be simplified.

Examples of the acid gas contained in the gas to be treated of the acid gas capture system include carbon dioxide ($CO_2$), hydrogen sulfide, sulfur dioxide, nitrogen dioxide, dimethyl sulfide (DMS), and hydrogen chloride. In one embodiment, the acid gas is carbon dioxide ($CO_2$), and the gas to be treated is a $CO_2$-containing gas. The $CO_2$-containing gas may also contain nitrogen in addition to $CO_2$. The $CO_2$-containing gas is typically air (atmosphere). The $CO_2$ concentration in the $CO_2$-containing gas before being supplied to the acid gas capture system is, for example, 100 ppm (on a volume basis) or more and 2 vol% or less.

Examples of the heating medium supplied by the heating medium supply portion include water vapor and $CO_2$. The heating media may be used alone or in combination thereof. When the acidic gas is $CO_2$, the heating medium is preferably $CO_2$.

Now, description is given in detail of a case in which the acid gas and the heating medium are each carbon dioxide ($CO_2$).

When the acid gas is $CO_2$, the acid gas adsorption material included in the acid gas adsorption part is a carbon dioxide adsorption material.

Any appropriate compound capable of adsorbing and desorbing $CO_2$ may be adopted as the carbon dioxide adsorption material. Examples of the carbon dioxide adsorption material include: nitrogen-containing compounds; alkali compounds, such as sodium hydroxide and potassium hydroxide; carbonate salts, such as calcium carbonate and potassium carbonate; hydrogen carbonate salts, such as calcium hydrogen carbonate and potassium hydrogen carbonate; metal organic frameworks (MOF), such as MOF-74, MOF-200, and MOF-210; ionic liquids; deep eutectic solvents; oxides, such as cerium oxide and iron oxide; zeolite; activated carbon; and nitrogen-doped carbon. Those carbon dioxide adsorption materials may be used alone or in combination thereof.

Of such carbon dioxide adsorption materials, a nitrogen-containing compound and an ionic liquid are preferred.

More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethyleneamine compounds such as tetraethylenepentamine; aminosilane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; ethyleneimine; linear polyethyleneimines; branched polyethyleneimines each having a primary amino group to a tertiary amino group; piperazine compounds such as 1-(2-hydroxyethyl) piperazine; polyamidoamine; polyvinylamine; and organic/inorganic compounds each having an amino group added as a substituent thereto.

Of the carbon dioxide adsorption materials, methyldiethylamine, monoethanolamine, a cyclic amine, diethanolamine, tetraethylenepentamine, ethyleneimine, a linear polyethyleneimine, a branched polyethyleneimine, and an organic/inorganic compound having an amino group added as a substituent thereto are preferred.

Such nitrogen-containing compounds may be used alone or in combination thereof.

The ionic liquid is a "salt" of a liquid formed only of an ion (an anion or a cation), and is in a liquid state under normal temperature and normal pressure (23°C, 0.1 MPa). Examples of the cation of the ionic liquid include: an ammonium-based ion, such as an imidazolium salt or a pyridinium salt; a phosphonium-based ion; a sulfonium salt; and an inorganic-based ion. Examples of the anion of the ionic liquid include: a halogen-based ion, such as a bromide ion or a triflate ion; a boron-based ion such as a tetraphenylborate ion; a phosphorus-based ion such as a hexafluorophosphate ion; and a sulfur-based ion such as an alkyl sulfonate ion. Of the ionic liquids, a combination of an imidazolium salt serving as a cation and a triflate ion serving as an anion is preferred.

The ionic liquid is more preferably used in combination with a carbon dioxide adsorption material other than the ionic liquid (hereinafter referred to as "another carbon dioxide adsorption material"). In this case, the ionic liquid is applied to another carbon dioxide adsorption material (for example, a nitrogen-containing compound). Thus, the performance of the carbon dioxide adsorption material can be improved, and the lifetime thereof can be extended.

The content ratio of the ionic liquid is, for example, 0.000001 part by mass or more, preferably 0.00001 part by mass or more with respect to 1 part by mass of another carbon dioxide adsorption material. Meanwhile, the content ratio of the ionic liquid is, for example, 0.1 part by mass or less, preferably 0.05 part by mass or less with respect to 1 part by mass of another carbon dioxide adsorption material. When the content ratio of the ionic liquid falls within the above-mentioned ranges, the performance of the carbon dioxide adsorption material can be stably improved, and the lifetime thereof can be stably extended.

A specific configuration of the acid gas adsorption part is described below.

B. Acid Gas Adsorption Part

B-1. First Embodiment of Acid Gas Adsorption Device

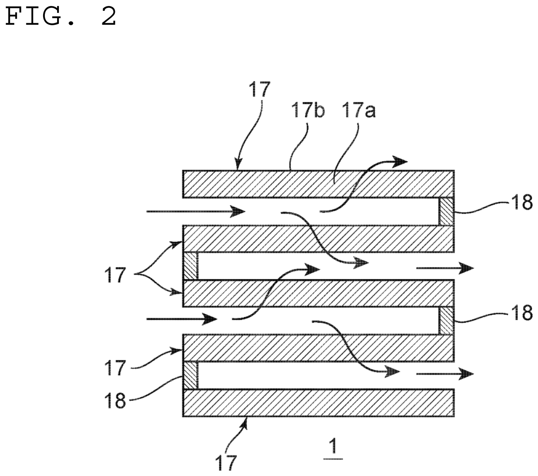

In one embodiment, as illustrated in FIG. **2**, the acid gas adsorption part **1** includes a plurality of adsorption parts **17.**

The plurality of adsorption parts **17** are stacked in a thickness direction thereof so as to be spaced apart from each other. A flow passage is formed between adjacent adsorption parts **17** among the plurality of adsorption parts **17**. In the illustrated example, five adsorption parts **17** are arranged in parallel. However, the number of the adsorption parts **17** is not limited thereto. The number of the adsorption parts **17** is, for example, 5 or more, preferably 10 or more, more preferably 20 or more. A distance between adjacent adsorption parts **17** among the plurality of adsorption parts **17** is, for example, 0.5 cm or more and 1.5 cm or less.

Each of the plurality of adsorption parts **17** includes a plurality of pellet-like adsorption materials **17a** and a flexible fiber member **17b.**

The pellet-like adsorption material **17a** serves as an acid gas adsorption material, and typically serves as a carbon dioxide adsorption material. Examples of a material for the pellet-like adsorption material **17a** include a material modified with the above-mentioned acid gas adsorption material, preferably cellulose modified with the above-mentioned acid gas adsorption material, more preferably nanofibrillated cellulose modified with the above-mentioned acid gas adsorption material. A mean primary particle diameter of the pellet-like adsorption material **17a** is, for example, 60 $\mu$m or more and 1,200 $\mu$m or less. Any appropriate value may be used as a filling ratio of the pellet-like adsorption materials **17a** in the adsorption parts **17.**

The flexible fiber member **17b** is typically formed in a hollow shape (bag shape) that allows the plurality of pellet-like adsorption materials **17a** to be housed therein. The flexible fiber member **17b** allows passage of a gas and regulates passage of the pellet-like adsorption material. The flexible fiber member **17b** may be a fabric or a non-woven fabric. Examples of a material for the flexible fiber member **17b** include organic fibers and natural fibers, preferably, a polyethylene terephthalate fiber, a polyethylene fiber, and a cellulose-based fiber. A thickness of the flexible fiber member **17b** is, for example, 25 $\mu$m or more and 500 $\mu$m or less.

The acid gas adsorption part **1** of the illustrated example further includes a plurality of spacers **18**. The spacer **18** is located between adjacent adsorption parts **17** among the plurality of adsorption parts **17**. With this configuration, a distance between adjacent adsorption material layers among the adsorption material layers can be stably ensured. In one embodiment, the plurality of adsorption parts **17** and the plurality of spacers **18** are arranged in a substantially zig-zag pattern when viewed from a direction (depth direction on the drawing sheet of each of FIG. **1A** and FIG. **1B**) orthogonal to the thickness direction of the adsorption parts **17.**

As the acid gas adsorption part **1** as described above, there is, for example, a gas separation unit as described in WO 2014/170184 A1. The publication is incorporated herein in its entirety by reference.

B-2. Second Embodiment of Gas Adsorption Device

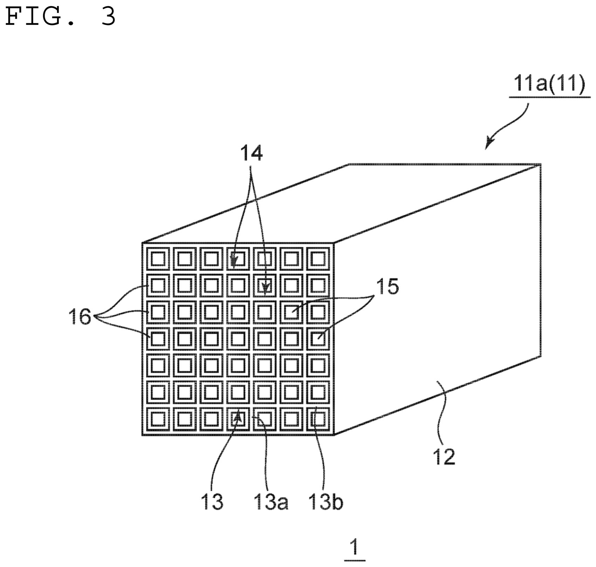

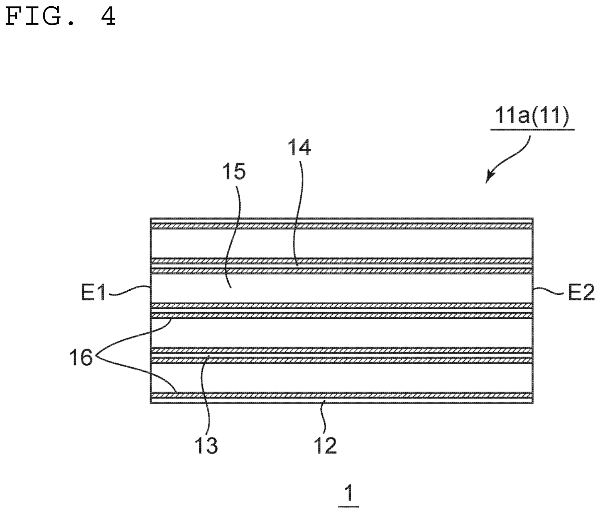

In another embodiment, as illustrated in FIG. **3** and FIG. **4**, the acid gas adsorption part **1** includes a base material **11** and acid gas adsorption material layers **16.**

The structure of the base material **11** is not particularly limited, and is, for example, a honeycomb-like structure, a filter structure such as a filtration cloth, or a pellet structure. The acid gas adsorption material layer **16** is not particularly limited as long as the layer is arranged on the surface of any such base material **11.**

B-2-1. Honeycomb-like Base Material

In one embodiment, the base material **11** is a honeycomb-like base material **11a**. The honeycomb-like base material **11a** includes partition walls **13** that define a plurality of cells **14.**

The cells **14** each extend from a first end surface **E1** (inflow end surface) of the honeycomb-like base material **11a** to a second end surface **E2** (outflow end surface) thereof in the lengthwise direction (axial direction) of the honeycomb-like base material **11a** (see FIG. **4**). The cells **14** each have any appropriate shape in a cross section in a direction perpendicular to the lengthwise direction of the honeycomb-like base material **11a**. The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells **14** per unit area) may be appropriately set in accordance with purposes. The cell density may be, for example, from 4 cells/cm$^2$ to 320 cells/cm$^2$. When the cell density falls within such a range, the strength and effective geometric surface area (GSA) of the honeycomb-like base material can be sufficiently ensured.

The honeycomb-like base material **11a** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **11a** of the illustrated example has a prismatic columnar shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **11a** typically includes: an outer wall **12;** and a partition wall **13** positioned inside the outer wall **12.** In the illustrated example, the outer wall **12** and the partition wall **13** are integrally formed. The outer wall **12** and the partition wall **13** may be separate bodies.

In the illustrated example, the outer wall **12** has a rectangular cylindrical shape. The thickness of the outer wall **12** may be set to any appropriate thickness. The thickness of the outer wall **12** is, for example, from 0.1 mm to 10 mm.

The partition wall **13** defines the plurality of cells **14.** More specifically, the partition wall **13** has a first partition wall **13a** and a second partition wall **13b** perpendicular to each other, and the first partition wall **13a** and the second partition wall **13b** define the plurality of cells **14.** The sectional shapes of the cells **14** are each a substantially quadrangular shape. The configuration of the partition wall is not limited to the partition wall **13** described above. The partition wall may have a first partition wall extending in a radial direction and a second partition wall extending in a circumferential direction, which define a plurality of cells.

The thickness of the partition wall **13** may be appropriately set in accordance with the applications of the acid gas adsorption device. The thickness of the partition wall **13** is typically smaller than the thickness of the outer wall **12.** The thickness of the partition wall **13** is, for example, from 0.03 mm to 0.6 mm. The thickness of the partition wall is measured, for example, through sectional observation with a scanning electron microscope (SEM). When the thickness of the partition wall falls within such a range, the honeycomb-like base material can achieve sufficient mechanical strength, and can also achieve a sufficient opening area (total area of the cells in a cross section).

The porosity of the partition wall **13** may be appropriately set in accordance with purposes. The porosity of the partition wall **13** is, for example, 15% or more, preferably 20% or more. Meanwhile, the porosity of the partition wall **13** is, for example, 70% or less, preferably 45% or less. The porosity may be measured, for example, by mercury porosimetry.

The bulk density of the partition wall **13** may be appropriately set in accordance with purposes. The bulk density of the partition wall **13** is, for example, 0.10 $g/cm^3$ or more, preferably 0.20 $g/cm^3$ or more. Meanwhile, the bulk density of the partition wall **13** is, for example, 0.60 $g/cm^3$ or less, preferably 0.50 $g/cm^3$ or less. The bulk density may be measured, for example, by mercury porosimetry.

A material for forming the partition wall **13** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such a honeycomb-like base material **11a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **11a** is produced. When the firing is adopted, the body is fired at, for example, from 1,200°C to 1,500°C. A firing time period is, for example, 1 hour or more and 20 hours or less.

B-2-2. Acid Gas Adsorption Layer (Carbon Dioxide Adsorption Layer)

In one embodiment, the acid gas adsorption material layer **16** is formed on the surface of the partition wall **13** in the cell **14.** In the honeycomb-like base material **11a,** a cell flow passage **15** is formed in a portion (typically, a center portion) in a cross section of the cell **14** in which the acid gas adsorption material layer **16** is not formed. The acid gas adsorption material layer **16** may be formed on the entire inner surface of the partition wall **13** (specifically, so as to surround the cell flow passage **15)** as in the illustrated example, or may be formed on part of the surface of the partition wall. When the acid gas adsorption material layer **16** is formed on the entire inner surface of the partition wall **13,** an improvement in acid gas (typically, $CO_2$) adsorption efficiency can be achieved.

The cell flow passage **15** extends from the first end surface **E1** (inflow end surface) to the second end surface **E2** (outflow end surface) as with the cells **14.** Examples of the sectional shape of the cell flow passage **15** include the same sectional shapes as those of the cells **14** described above. Of those, for example, a hexagon or a quadrangle is preferred, and a square, a rectangle, or a hexagon is more preferred. The sectional shapes and sizes of the cell flow passage **15** may be all the same, or may be at least partly different.

The gas to be treated containing the acid gas is typically supplied to the cells **14** (more specifically, the cell flow passages **15**) in an adsorption step described later, and the heating medium flows through the cells **14** in the desorption step described later.

The acid gas adsorption material layer **16** includes the acid gas adsorption material in accordance with the acid gas to be adsorbed. When the acid gas is $CO_2$, the acid gas adsorption material layer **16** includes the above-mentioned carbon dioxide adsorption material.

The acid gas adsorption material layer may be formed only of the acid gas adsorption material. In this case, the acid gas adsorption material is directly supported by the partition wall **13** to face the flow passage. When the acid gas adsorption material layer is formed only of the acid gas adsorption material, the content ratio of the acid gas adsorption material in the acid gas adsorption material layer is typically 95.0 mass% or more and 100 mass% or less. When the content ratio of the acid gas adsorption material falls within the above-mentioned range, excellent acid gas adsorption efficiency can be stably ensured.

In one embodiment, the acid gas adsorption material layer **16** includes a porous carrier in addition to the above-mentioned acid gas adsorption material. In this case, the acid gas adsorption material is typically supported by the porous carrier to face the flow passage. When the acid gas adsorption material layer includes the porous carrier, the escape of the acid gas adsorption material from the acid gas adsorption material layer can be prevented in the adsorption step and/or the desorption step.

The porous carrier may form mesopores in the acid gas adsorption material layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), activated carbon, PVDF, zeolite, mesoporous silica, and mesoporous alumina are preferred. Those porous carriers may be used alone or in combination thereof. A material different from that of the acid gas absorption material is preferably adopted for the porous carrier.

The BET specific surface area of the porous carrier is, for example, 50 $m^2/g$ or more, preferably 500 $m^2/g$ or more. When the surface area of the porous carrier is equal to or more than the above-mentioned lower limits, the acid gas adsorption material can be stably supported, and hence an improvement in acid gas adsorption efficiency can be achieved. The upper limit of the BET specific surface area of the porous carrier is typically 2,000 $m^2/g$.

When the acid gas adsorption material layer includes the acid gas adsorption material and the porous carrier, the content ratio of the total of the acid gas adsorption material and the porous carrier in the acid gas adsorption material layer is, for example, 30 mass% or more, preferably 50 mass% or more. Meanwhile, the content ratio of the total of the acid gas adsorption material and the porous carrier is, for example, 100 mass% or less, preferably 99 mass% or less.

The content ratio of the acid gas adsorption material in the acid gas adsorption material layer is, for example, 30 mass% or more, preferably 50 mass% or more. Meanwhile, the content ratio of the acid gas adsorption material in the acid gas adsorption material layer is, for example, 99 mass% or less. The content ratio of the porous carrier is, for example, 0.01 part by mass or more, preferably 0.3 part by mass or more with respect to 1 part by mass of the acid gas adsorption material. Meanwhile, the content ratio of the porous carrier is, for example, 0.7 part by mass or less, preferably 0.5 part by mass or less with respect to 1 part by mass of the acid gas adsorption material. When the content ratio of the porous carrier falls within the above-mentioned ranges, the acid gas adsorption material can be more stably supported.

Such an acid gas adsorption material layer is typically produced by the following method. A solution of the acid gas adsorption material is prepared by dissolving the above-mentioned acid gas adsorption material in a solvent. Further, the above-mentioned porous carrier is added to the solvent as required. The order of addition of the acid gas adsorption material and the porous carrier is not limited to any particular order. After that, the solution of the acid gas adsorption material is applied onto the base material (specifically, the partition walls), and the coating film is then dried, and is sintered as required. Thus, the acid gas adsorption material layer is formed.

C. Acid Gas Capture Method

Next, an acid gas capture method according to another aspect of the present disclosure is described with reference to FIG. 1A. The acid gas capture method typically includes an adsorption step and a desorption step in the stated order.

In the adsorption step, a gas to be treated is supplied to the acid gas adsorption part **1** positioned in the flow passage **21** of the housing part **2** to cause the acid gas adsorption material to adsorb an acid gas. In the illustrated example, the first valve **51** and the second valve **52** are set to be in an opened state, and the gas to be treated containing the acid gas is supplied to the flow passage **21** of the housing part **2** through the first inflow port **22**. In this case, the gas to be treated containing the acid gas passes through the acid gas adsorption part **1**. As a result, the acid gas adsorption material included in the acid gas adsorption part **1** adsorbs the acid gas (typically, $CO_2$) to separate the acid gas from the gas to be treated.

A temperature (adsorption temperature) of the acid gas adsorption part in the adsorption step is, for example, 0°C or more, preferably 10°C or more. Meanwhile, the adsorption temperature is, for example, 50°C or less, preferably 40°C or less. In one embodiment, the adsorption temperature is equal to an outside air temperature. An operation time period of the adsorption step (adsorption time) is, for example, 15 minutes or more, preferably 30 minutes or more. Meanwhile, the adsorption time is, for example, 3 hours or less, preferably 2 hours or less.

When the adsorption temperature and/or the adsorption time falls within the above-mentioned ranges, the adsorption gas adsorption material can efficiently adsorb the acid gas.

An acid gas adsorption rate in the adsorption step (=100-(concentration of the acid gas in the treated gas having passed through the acid gas adsorption part/concentration of the acid gas in the gas to be treated before being supplied to the acid gas adsorption part×100)) is, for example, 60% or more, preferably 75% or more, more preferably 80% or more. The upper limit of the acid gas adsorption rate is typically 90%.

Next, as required, the first valve **51** is set to be in a closed state, and the second valve **52** is maintained in an opened state. Under this condition, the pressurizing device **62** is driven to start the supply of the heating medium to the flow passage **21**. As a result, the gas to be treated in the flow passage **21** is replaced by the heating medium.

After that, the desorption step is performed. In the desorption step, the heating medium having a pressure above the atmospheric pressure is supplied to the flow passage **21** to heat the acid gas adsorption part **1** to a predetermined desorption temperature, to thereby cause the acid gas adsorption material to desorb the acid gas. In the illustrated example, the first valve **51** and the second valve **52** are set to be in a closed state, and then the pressurizing device **62** and the heating device **63** are driven.

The pressurizing device **62** pumps the heating medium to the heating device **63** through the connection line **64**. As a result, the pressurized heating medium is supplied to the heating device **63.**

The heating device **63** heats the supplied heating medium. The heating temperature may be suitably and appropriately adjusted in accordance with the heating medium. The heating temperature is a temperature at which the acid gas adsorption part can be adjusted to a range of a desorption temperature described later, and is, for example, equal to or more than the desorption temperature. The heating temperature is more specifically from 70°C to 160°C, preferably from 80°C to 160°C. As a result, the acid gas can be efficiently desorbed from the acid gas adsorption material.

After that, the pressurized and heated heating medium passes through the supply line **61** to be supplied to the housing space **S.** Thus, the temperature of the acid gas adsorption part **1** is increased to a predetermined desorption temperature and the housing space **S** is increased in pressure.

The flow velocity of the heating medium supplied to the housing space **S** is, for example, from 0.1 m/s to 8 m/s. The heating medium typically passes through the second inflow port at such a flow velocity to be supplied to the housing space S. Then, in the desorption step, the temperature difference specific heat coefficient (described later) of the heating medium can be suitably adjusted.

The desorption temperature is, for example, 70°C or more, preferably 80°C or more. With this configuration, the acid gas can be efficiently desorbed from the acid gas adsorption material. Meanwhile, the desorption temperature is, for example, 160°C or less, preferably 110°C or less. With this configuration, the deterioration of the acid gas adsorption material can be stably suppressed. The desorption temperature can be checked by measuring the temperature in the vicinity of the outlet (downstream end) of the acid gas adsorption part.

When the acid gas adsorption part reaches the desorption temperature, the pressure of the housing space S is, for example, 0.12 MPaA or more, preferably 0.16 MPaA or more. With this configuration, the heating efficiency of the acid gas adsorption part can be stably improved. Meanwhile, the pressure of the housing space **S** is, for example, 1.0 MPaA or less, preferably 0.7 MPaA or less. With this configuration, the plate thickness of each member of the housing part can be suppressed, and a decrease in heating efficiency due to an increase in heat capacity of the housing part can be suppressed.

The operation time period of the desorption step (specifically, the time period during which the acid gas adsorption part is maintained at the above-mentioned desorption temperature and the housing space is maintained at the above-mentioned pressure) is, for example, 1 minute or more, preferably 5 minutes or more. Meanwhile, the operation time period of the desorption step is, for example, 1 hour or less, preferably 30 minutes or less.

In such a desorption step, the acid gas adsorbed by the acid gas adsorption material in the adsorption step is desorbed from the acid gas adsorption material. Thus, the captured gas containing the heating medium having passed through the acid gas adsorption part **1** and the acid gas desorbed from the acid gas adsorption material flows out of the housing part **2** through the second outflow port **25.**

In one embodiment, in the desorption step, the temperature difference specific heat coefficient $\Delta Cp/\Delta T$ of the heating medium satisfies the following formula (1). In other words, the acid gas capture system **100** is configured so that the $\Delta Cp/\Delta T$ of the heating medium satisfies the following formula (1). More specifically, under a state in which the acid gas adsorption part **1** is maintained at the above-mentioned desorption temperature and the housing space **S** is maintained at the above-mentioned pressure, the temperature difference specific heat coefficient $\Delta Cp/\Delta T$ of the heating medium satisfies the following formula (1).

In the embodiment of the present disclosure, the acid gas adsorption part can be efficiently heated by setting the $\Delta Cp/\Delta T$ (also referred to as "temperature difference specific heat coefficient") in the above-mentioned range. More specifically, it is assumed that heat transfer from the gas easily occurs on an upstream side of the acid gas adsorption part and heating does not easily occur on a downstream side thereof. However, in the embodiment of the present disclosure, a decrease in temperature of the gas in association with the flow is suppressed, and hence the entire acid gas adsorption part can be efficiently heated. Thus, the energy required for heating the acid gas adsorption part can be significantly suppressed, and hence the acid gas capture system can be stably operated with less energy.

$$\Delta Cp/\Delta T \leq 0.039 \ (J/(mol \cdot K^2)) \ \cdots \ (1)$$

$\Delta Cp$: a difference between a constant pressure molar specific heat "a" of the supplied heating medium at an inlet of the flow passage **21** and a constant pressure molar specific heat "b" of the captured gas discharged from the flow passage **21** (constant pressure molar specific heat "a"-constant pressure molar specific heat "b") (unit: J/(mol·K)),

$\Delta T$: a difference between a temperature "a" of the supplied heating medium at the inlet of the flow passage **21** and a temperature "b" of the captured gas discharged from the flow passage **21** (gas temperature "a"-gas temperature "b") (unit: K).

The $\Delta Cp/\Delta T$ is preferably 0.038 J/(mol·K$^2$) or less. The lower limit of the $\Delta Cp/\Delta T$ is typically -1.1 J/(mol·K$^2$). When the $\Delta Cp/\Delta T$ falls within such a range, the energy required for heating the acid gas adsorption part can be further reduced.

The $\Delta Cp$ (constant pressure molar specific heat "a"-constant pressure molar specific heat "b") is, for example, from -2.49 to 3.29, preferably from -2.49 to 1.14.

The constant pressure molar specific heat "a" of the heating medium at the inlet of the flow passage **21** can be calculated by measuring the temperature and pressure in the vicinity of an inlet (upstream end) of the acid gas adsorption part **1**. When the heating medium is a mixed gas, the composition of the mixed gas in the vicinity of the inlet of the acid gas adsorption part **1** is measured, and the sum of the composition ratio of each gas multiplied by the constant pressure molar specific heat of the corresponding gas is defined as the constant pressure molar specific heat "a".

In addition, the constant pressure molar specific heat "b" of the captured gas discharged from the flow passage **21** can be calculated by measuring the temperature and pressure in the vicinity of an outlet (downstream end) of the acid gas adsorption part **1.** When the captured gas is a mixed gas, the composition of the mixed gas in the vicinity of the outlet of the acid gas adsorption part **1** is measured, and the sum of the composition ratio of each gas multiplied by the constant pressure molar specific heat of the corresponding gas is defined as the constant pressure molar specific heat "b".

The range of the temperature "a" of the heating medium (heating medium at the time of passage through the second inflow port) supplied to the flow passage **21** is the same as the range of the heating temperature in the above-mentioned heating device.

After that, the captured gas having passed through the second outflow port **25** is supplied to the storage tank **42** through the capture line **41** and stored in the storage tank **42.**

The internal pressure of the storage tank **42** is, for example, from 0.12 MPaA to 1.0 MPaA, preferably from 0.16 MPaA to 0.7 MPaA.

Thus, the captured gas stored in the storage tank **42** can be smoothly supplied to another device when being utilized for various applications (for example, a raw material for synthetic fuel). In addition, as described above, at least part of the captured gas can be returned as the heating medium to the heating medium supply part **6** by the return part **3.** When the internal pressure of the storage tank falls within the above-mentioned ranges, at least part of the captured gas can be utilized as the heating medium without additional pressure adjustment, and hence the energy required for pressurization can be further reduced.

The acid gas capture method may include a cooling step in addition to the adsorption step and the desorption step. The cooling step is performed after the desorption step and before the adsorption step, and the acid gas adsorption part is cooled to the above-mentioned adsorption temperature. The adsorption step, the desorption step, and the cooling step are preferably continuously performed repeatedly in the stated order.

Examples

Now, the present disclosure is specifically described by way of Examples. However, the present disclosure is not limited to these Examples.

<Example 1>

The acid gas capture system illustrated in FIG. **1A** was prepared. The acid gas capture system included the above-mentioned acid gas adsorption part, the above-mentioned housing part, the above-mentioned heating medium supply part, and the above-mentioned capture part. As illustrated in FIG. **3** and FIG. **4,** the acid gas adsorption part included the above-mentioned honeycomb-like base material and the above-mentioned acid gas adsorption material layer.

Next, the above-mentioned adsorption step and the above-mentioned desorption step were performed in the stated order by the acid gas capture system.

In the desorption step, the pressure of the housing space that houses the acid gas adsorption part was maintained at 0.16 MPa in the housing part. In this state, the heating medium supply part supplied carbon dioxide serving as a heating medium to the flow passage of the housing part through the second inflow port. In this case, the captured gas containing the carbon dioxide having passed through the acid gas adsorption part and the carbon dioxide desorbed from the acid gas adsorption material was discharged from the housing part through the second outflow port.

The pressure and temperature (supply temperature "a") of the heating medium passing through the second inflow port, the temperature (discharge temperature "b") of the captured gas passing through the second outflow port, the temperature difference $\Delta T$ therebetween, and $\Delta Cp/\Delta T$ are shown in Table 1.

As a result, the temperature difference in the acid gas adsorption part was maintained within 10°C in the desorption step.

<Examples 2 and 3>

The desorption step was performed in the same manner as in Example 1 except that the supply temperature "a" was changed to a value shown in Table 1. In the desorption step, the temperature difference in the acid gas adsorption part was maintained within the $\Delta T$ shown in Table 1.

<Examples 4 to 6>

The desorption step was performed in the same manner as in Examples 1 to 3 except that the pressure of the heating medium passing through the second inflow port was changed to 0.210 MPa. In the desorption step, the temperature difference in the acid gas adsorption part was maintained within the $\Delta T$ shown in Table 1.

<Comparative Example 1>

The desorption step was performed in the same manner as in Example 1 except that the heating medium supply part supplied carbon dioxide at the atmospheric pressure (0.101 MPaA) as the heating medium to the flow passage of the housing part. In the desorption step, the temperature difference in the acid gas adsorption part was maintained within 1°C.

[Table 1]

| No. | Pressure [MPaA] | Supply temperature "a" [°C] | Discharge temperature "b" [°C] | $\Delta T$ (="a"-"b") [°C] | $\Delta Cp/\Delta T$ [J/(mol·$K_2$)] |
|---|---|---|---|---|---|
| Example 1 | 0.160 | 120 | 110 | 10 | 0.036 |
| Example 2 | | 90 | 85 | 5 | 0.038 |
| Example 3 | | 80 | 79 | 1 | 0.038 |
| Example 4 | 0.210 | 120 | 110 | 10 | 0.035 |
| Example 5 | | 90 | 85 | 5 | 0.037 |
| Example 6 | | 80 | 79 | 1 | 0.037 |
| Comparative Example 1 | 0.101 | 71 | 70 | 1 | 0.040 |

<Evaluation>

As is apparent from Table 1, in Examples 1 to 6 in which the heating medium having a pressure above the atmospheric pressure is supplied to the flow passage in the desorption step, the $\Delta Cp/\Delta T$ can be stably set to 0.039 (J/(mol·$K^2$)) or less, and in Comparative Example 1 in which the heating medium at the atmospheric pressure is supplied to the flow passage, the $\Delta Cp/\Delta T$ can be 0.040 (J/(mol·$K^2$)). Thus, it is understood that, in Examples 1 to 6, the acid gas adsorption part can be sufficiently heated with less energy as compared to Comparative Example 1.

In particular, in Example 3, the pressure of the heating medium is lower than those of Examples 4 to 6, and the supply temperature of the heating medium is lower than those of Examples 1, 2, 4, and 5. Thus, the energy required for heating the acid gas adsorption part is the smallest. However, in Example 3, the $\Delta Cp/\Delta T$ is 0.039 (J/(mol·$K^2$)) or less, and

hence the acid gas adsorption part can be sufficiently heated with less energy in the desorption step.

Industrial Applicability

The acid gas capture system and the acid gas capture method according to the embodiment of the present disclosure can be used for separation and capture of an acid gas, and particularly, can be suitably used for a Carbon dioxide Capture, Utilization and Storage (CCUS) cycle.

Reference Signs List

| 1 | acid gas adsorption part |
|---|---|
| 2 | housing part |
| 21 | flow passage |
| 3 | return part |
| 4 | capture part |
| 6 | heating medium supply part |
| 62 | pressurizing device |

**Claims**

1. An acid gas capture system, comprising:

   an acid gas adsorption part including an acid gas adsorption material capable of adsorbing an acid gas contained in a gas to be treated and capable of desorbing the adsorbed acid gas;
   a housing part, which includes a flow passage to which the gas to be treated is to be supplied, and which is configured to house the acid gas adsorption part so that the acid gas adsorption part is positioned in the flow passage;
   a heating medium supply part configured to supply a heating medium having a pressure above an atmospheric pressure to the flow passage; and
   a capture part configured to capture a captured gas containing the heating medium having passed through the acid gas adsorption part and the acid gas desorbed from the acid gas adsorption material, from the housing part.

2. The acid gas capture system according to claim 1, wherein a temperature difference specific heat coefficient $\Delta Cp/\Delta T$ of the heating medium is set so as to satisfy the following formula (1):

$$\Delta Cp/\Delta T \leq 0.039 \ (J/(mol \cdot K^2)) \ \cdots \ (1)$$

   $\Delta Cp$: a difference between a constant pressure molar specific heat "a" of the supplied heating medium at an inlet of the flow passage and a constant pressure molar specific heat "b" of the captured gas discharged from the flow passage (constant pressure molar specific heat "a"-constant pressure molar specific heat "b") (unit: J/(mol·K)),
   $\Delta T$: a difference between a temperature "a" of the supplied heating medium at the inlet of the flow passage and a temperature "b" of the captured gas discharged from the flow passage (gas temperature "a"-gas temperature "b") (unit: K).

3. The acid gas capture system according to claim 1, wherein the heating medium supply part includes a pressurizing device configured to pressurize the heating medium.

4. The acid gas capture system according to claim 1, wherein the capture part includes a storage tank configured to store the captured gas.

5. The acid gas capture system according to claim 4, further comprising a return part configured to return at least part of the captured gas stored in the storage tank, as the heating medium from the storage tank to the heating medium supply part.

6. The acid gas capture system according to claim 4, wherein the storage tank is configured to separate part of the heating medium from the captured gas.

7. The acid gas capture system according to any one of claims 1 to 6, wherein the acid gas is carbon dioxide.

8. An acid gas capture method, comprising:

an adsorption step of supplying a gas to be treated containing an acid gas, to a flow passage of a housing part in which an acid gas adsorption part including an acid gas adsorption material is arranged, to cause the acid gas adsorption material to adsorb the acid gas; and
a desorption step of supplying a heating medium having a pressure above an atmospheric pressure to the flow passage, and heating the acid gas adsorption part to a predetermined desorption temperature to cause the acid gas adsorption material to desorb the acid gas,
wherein, in the desorption step, a captured gas containing the heating medium having passed through the acid gas adsorption part and the acid gas desorbed from the acid gas adsorption material is discharged from the flow passage.

9. The acid gas capture method according to claim 8, wherein a temperature difference specific heat coefficient $\Delta Cp/\Delta T$ of the heating medium satisfies the following formula (1):

$$\Delta Cp/\Delta T \leq 0.039 \ (J/(mol \cdot K^2)) \ \cdots \ (1)$$

$\Delta Cp$: a difference between a constant pressure molar specific heat "a" of the supplied heating medium at an inlet of the flow passage and a constant pressure molar specific heat "b" of the captured gas discharged from the flow passage (constant pressure molar specific heat "a"-constant pressure molar specific heat "b") (unit: J/(mol·K)),
$\Delta T$: a difference between a temperature "a" of the supplied heating medium at the inlet of the flow passage and a temperature "b" of the captured gas discharged from the flow passage (gas temperature "a"-gas temperature "b") (unit: K).

FIG. 1A

FIG. 1B

FIG. 2

FIG. 3

FIG. 4

# EP 4 696 402 A1

## INTERNATIONAL SEARCH REPORT

| International application No. |
|---|
| **PCT/JP2024/013064** |

### A. CLASSIFICATION OF SUBJECT MATTER

***B01D 53/04***(2006.01)i; ***C01B 32/50***(2017.01)i
FI:    B01D53/04 220; C01B32/50

According to International Patent Classification (IPC) or to both national classification and IPC

### B. FIELDS SEARCHED

Minimum documentation searched (classification system followed by classification symbols)

B01D53/04; C01B32/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-147386 A (HITACHI, LTD.) 01 August 2013 (2013-08-01) claims, example 5, fig. 6 | 1, 3-8 |
| A | | 2, 9 |
| P, X | JP 2023-147421 A (ASAHI KASEI KABUSHIKI KAISHA) 13 October 2023 (2023-10-13) claims, paragraphs [0016]-[0020], [0028], examples, fig. 2 | 1, 3-8 |
| P, A | | 2, 9 |
| A | JP 2019-69417 A (HITACHI, LTD.) 09 May 2019 (2019-05-09) claims, examples, fig. 1, 2 | 1-9 |
| A | JP 2014-4533 A (KABUSHIKI KAISHA TOSHIBA) 16 January 2014 (2014-01-16) paragraphs [0066]-[0068] | 1-9 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

### INTERNATIONAL SEARCH REPORT
Information on patent family members

International application No.

**PCT/JP2024/013064**

| Patent document cited in search report | | | Publication date (day/month/year) | Patent family member(s) | | | Publication date (day/month/year) |
|---|---|---|---|---|---|---|---|
| JP | 2013-147386 | A | 01 August 2013 | US | 2015/0013543 | A1 | |
| | | | | claims, example 5, fig. 6 | | | |
| | | | | EP | 2815799 | A1 | |
| | | | | CA | 2858307 | A | |
| JP | 2023-147421 | A | 13 October 2023 | (Family: none) | | | |
| JP | 2019-69417 | A | 09 May 2019 | (Family: none) | | | |
| JP | 2014-4533 | A | 16 January 2014 | US | 2013/0343974 | A1 | |
| | | | | paragraphs [0070]-[0072] | | | |
| | | | | EP | 2679296 | A2 | |
| | | | | CN | 103505994 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014170184 A1